# EUROPÄISCHE PATENTSCHRIFT

(11) **EP 1 211 738 B1**
(45) Veröffentlichungstag und Bekanntmachung des Hinweises auf die Patenterteilung: **08.03.2006**
(21) Anmeldenummer: 00126039.7
(22) Anmeldetag: 29.11.2000
(51) Int. Cl.: H01M 2/12

(54) **Verschlussstopfenanordnung für Akkumulatoren**
Vent plug for accumulators
Bouchon à évent pour accumulateurs

(43) Veröffentlichungstag der Anmeldung: 05.06.2002
(73) Patentinhaber: VB Autobatterie GmbH & Co. KGaA., 30419 Hannover (DE)
(72) Erfinder: Cramer, Wilhelm, 59929 Brilon-Messinghausen (DE); Hülscher, Manfred Dr., 27721 Ritterhude (DE); Nann, Dr. Eberhard, 59494 Soest (DE)
(74) Vertreter: Gramm, Werner

(56) Entgegenhaltungen:
- EP-A- 0 756 338
- EP-A- 0 920 063
- DE-A- 4 032 858
- US-A- 4 052 534
- US-A- 4 328 290

## Beschreibung

Die vorliegende Erfindung betrifft eine Verschlußstopfenanordnung für eine Zellenöffnung eines Akkumulators, mit einem eine Innenhülse und ein Ventilelement aufweisenden Stopfenelement.

Gattungsgemäße Verschlußstopfenanordnungen sind im Stand der Technik bekannt. Vorzugsweise in Rekombinationsakkumulatoren weisen die einzelnen Zellen Öffnungen, auf, meist mit Gewinden versehen, und das auf Druck ansprechende Ventil ermöglicht ein Abführen entstehender Gase, verhindert jedoch einen Auslauf oder Verdunstungen sowie umgekehrt einen unerwünschten Eintritt der Umgebungsatmosphäre in eine Akkumulatorzelle.

Aus der US-PS 405 25 34 ist eine Verschlußstopfenanordnung bekannt, bei welcher ein topfförmiges Stopfenelement der Aufnahme einer elastischen, geschlitzten Ventilplatte und eines die Ventilplatte haltenden Einsatzes dient, welche durch eine zusätzliche Buchse gehalten sind, die ihrerseits mit dem Stopfenelement verbunden ist. Eine vergleichbare Anordnung ist auch aus der DE 40 32 858 bekannt, wobei neben den genannten Bauteilen, Stopfenelement, Einsatz, Ventilplatte und Buchse ein aufwendiger Ventilteller eingesetzt sind. Die Bauform ist bei den vorbekannten Verschlußstopfenanordnungen konstruktionsbedingt sehr lang und es werden eine große Vielzahl von Teilen benötigt, die jeweils genauestens aufeinander abgestimmt und mit großem Aufwand montiert werden müssen, um eine sichere Funktionsweise zu gewährleisten.

Eine Weiterentwicklung ist aus der DE 195 27 526 bzw der EP 0 756 338 A1 bekannt, bei welcher ein Stopfenelement einen Einsatz mit Ventilsitz und daran angeordnetem Ventil aufnimmt. Zur Erzielung einer kurzen Bauform werden der Einsatz mit Ventilsitz und Ventilelement derart in das topfförmige Stopfenelement eingesetzt, daß diese vollständig und ohne jeden Vorstand in dem Stopfenelement untergebracht sind. Dazu ist die Erzielung einer gasdichten Verbindung zwischen Einsatz und Stopfenelement zwischen äußerem Umfang des Einsatzes bzw. inneren Umfang des Stopfenelementes erforderlich. Die einzelnen Teile müssen mit sehr enger Fertigungstoleranz gefertigt und sehr aufwendig montiert werden, da der Einsatz maximal bis zu Bündigkeit in das Stopfenelement eingetrieben werden kann. In diesem Fall sind die beiden unteren Stirnkanten einerseits des Stopfenetements und andererseits des Einsatzes bündig in einer Ebene. Will man den Einsatz weiter eintreiben, bedarf es hierzu eines speziellen Werkzeuges. Hierdurch wird der Vorrichtungs- und Montageaufwand unwirtschaftlich erhöht. Ist jedoch in der Position, wo Bündigkeit erlangt wird, der für die Ventüfunktion erforderliche Anschlag nicht erreicht, ist das Ventilelement nicht in der vorgesehenen Weise positioniert und die Funktion ist nicht mehr gewährleistet. Darüber hinaus wird beim Eintreiben des Einsatzes in das Stopfenelement auch das Stopfenelement selbst mechanisch beaufschlagt, so daß dieses beispielsweise an der unteren freien Stirnkante leicht beschädigt werden kann. Die vorbekannte Konstruktion macht die toleranzgenaue Abstimmung einer Vielzahl von Bauteilen aufeinander einerseits und eine aufwendige Montage der Elemente relativ zueinander andererseits erforderlich, so daß die bestimmungsgemäßen Positionen exakt erhalten werden, ohne daß beispielsweise das Aufnehmen des Stopfenteils in irgendeiner Form beschädigt wird, und darüber hinaus eine gasdichte Verbindung zwischen Innenteil und Stopfenelement über die zueinanderweisenden Umfangsflächen erzielt werden kann.

Ausgehend vom vorbekannten Stand der Technik liegt der vorliegenden Erfindung die **Aufgabe** zugrunde, eine Verschlußstopfenanordnung der gattungsgemäßen Art dahingehend weiterzubilden, daß ohne übermäßige Fertigungstoleranzen einhalten zu müssen, eine möglichst geringe Anzahl von Bauteilen mit geringem Montageaufwand auf einfache Weise miteinander kombiniert werden können, und dennoch die sichere Funktion ohne großen Aufwand gewährleistet werden kann. Insgesamt soll die weitergebildete Verschlußstopfenanordnung den erforderlichen wirtschaftlichen Aufwand verringern.

Bei derartigen, industriell in Massenproduktionen gefertigten Elementen bedeuten schon kleinste Vereinfachungen hinsichtlich der Einzelteilfertigung und der Montage zusammengenommen erhebliche und signifikante wirtschaftliche Vorteile.

Zur technischen **Lösung** wird eine gattungsgemäße Verschlußstopfenanordnung dadurch weitergebildet, daß das Stopfenelement topfförmig mit einer zum Einsetzen in die und Verschließen der Zellenöffnung geeigneten Außenkontur, einem innen liegenden Hohlraum und einer Gasverbindungsöffnung zwischen Hohlraum und Außenseite ausgebildet ist, die Innenhülse im wesentlichen zylindrisch mit einer zum Einsetzen in den Hohlraum des Stopfenelements geeigneten Außenkontur und einer in den Hohlraum mündenden Gasdurchleitungsöffnung ausgebildet ist, das Ventilelement als separates, im Hohlraum durch die Innenhülse fixierbares und gasdruckabhängig eine Gasverbindung zwischen der Gasdurchleitungsöffnung der Innenhülse und der Gasverbindungsöffnung des Stopfenelements herstellendes Element ausgebildet ist, die Innenhülse und das Stopfenelement gasdicht miteinander verbindbar sind und die Innenhülse einen im Einbauzustand teilweise aus dem Hohlraum des Stopfenelements herausstehenden Montageansatz aufweist.

Erfindungsgemäß ist an der Innenhülse ein Montageansatz ausgebildet, welcher es ermöglicht, einerseits das Stopfenelement auf einfache Weise und ohne dieses bei der Kraftaufbringung zur Montage beeinträchtigen zu müssen, zu positionieren, und relativ dazu die Innenhülse zu positionieren und unter Aufbringung einer Kraft über einen bestimmten Weg in eine definierte Position relativ zum Stopfenelement zu montieren, wobei der einzige Kraftangriffspunkt der Montageansatz ist. Nach bestimmungsgemäßer Montage steht der Montageansatz aus dem Stopfenelement heraus. Dadurch ist zwar die axiale Länge des Stopfenelementes geringfügig verlängert, aber die Fertigungs- und Montagevorteile gleichen dies aus. Der Vorstand ist geringfügig und wirkt sich auf den universalen Einsatz der Verschlußstopfenanordnung nicht negativ aus.

Gegenüber dem Stand der Technik müssen die Teile nicht mit so engen Fertigungstoleranzen gefertigt werden, da sich die Montageposition nicht aus dem Erreichen bestimmter Teile der Innenhülse, beispielsweise der Stirnseite, relativ zu bestimmten Teilen des Stopfenelementes, beispielsweise dessen Stirnseite, ergibt, sondern einfach aus der Einleitung einer vorbestimmten Kraft und/oder über einen vorbestimmten Weg auf den Montageansatz der Innenhülse, welche vorher in Eintreibposition relativ zum Stopfenelement positioniert wurde. Darüber hinaus bedarf es nicht aufwendiger Montageelemente, um beispielsweise bis zur Bündigkeit oder gar über die Bündigkeit hinaus die Innenhülse in das Stopfenelement einzutreiben.

Die erfindungsgemäße Lösung kommt mit nur drei einzeln zu fertigenden Bauteilen aus, die jede für sich gemäß ihrer funktionalen Eigenschaften variierbar sind. Die drei Bauteile werden relativ zueinander positioniert und fixiert. Durch die Ausbildung eines Montageansatzes an der Innenhülse, die im Einbauzustand aus dem Stopfenelement axial heraussteht, ergibt sich die Möglichkeit, eine gasdichte Verbindung zwischen Innenhülse und Stopfenelement im Bereich der unteren Stirnkanten beider Elemente auszuführen. Gemäß einem vorteilhaften Vorschlag der Erfindung werden beide Elemente, Stopfenelement und Innenhülse, im Bereich der unteren Stirnkanten miteinander verschweißt. In besonders vorteilhafter Weise ist der Montageansatz ringförmig ausgebildet und von einem konzentrisch dazu angeordneten Ring umgeben, welcher äußere Ring nach dem Einbau der Innenhülse in das Stopfenelement durch Schweißen auf die Stirnkante des Stopfenelementes aufgeschmolzen und mit diesem verschweißt wird. Diese vorteilhafte Ausgestaltung reduziert weiterhin die Anforderungen an die Fertigungstoleranzen. Die Innenhülse und das Stopfenelement sind durch das Verschweißen im Bereich der zueinander weisenden Umfangsflächen gasdicht verbunden und die eigentlichen Funktionsflächen des Stopfenelementes, nämlich die Gasdurchführöffnung sowie der an der im Stopfenelement eingeschobenen Stirnkante der Innenhülse ausgebildete Anschlag für das Ventilelement sind von der Verbindung nicht betroffen.

In vorteilhafter Weise können der. Montageanschlag und der Verbindungsring ringförmig, aber auch in Form von Ringsegmenten ausgebildet sein, so daß einzelne stegartige. Vorsprünge die gleiche Funktion übemehmen können. Wesentlich ist, daß die aufgebrachte Kraft beim Einschieben der Innenhülse ein verkantungsfreies Einschieben der Hülse in das Stopfenelement ermöglicht und der zum Verschweißen vorgesehene Außenbereich eine ausreichende fixierende und gasdichte Verbindung mit der Stirnkante des Stopfenelements ermöglichen.

In vorteilhafter Weise weist das Stopfenelement im Hohlraum einen Anschlag für die Innenhülse auf. Durch diese Maßnahme kann die Innenhülse maximal bis zu einer vorgegebenen Anschlagsposition eingeschoben werden. Weiterhin ist mit der Erfindung vorgesehen, daß das Stopfenelement einen Anschlag bzw. eine Anlagefläche für das Ventilelement aufweist. Eine solche Anlagefläche kann an der inneren Stirnfläche des Hohlraums vorzugsweise im Mittelpunktsbereich ausgebildet sein. Das Ventilelement kann auf den Anlagepunkt aufgelegt werden und im wesentlichen scheibenförmig ausgebildet sein, so daß die eingetriebene Innenhülse mit ihrer inneren Stirnkante das Ventilelement berührt und gegen die Anlagefläche drückt. Das Ventilelement ist somit in einer definierten Position und mit einer definierten Kraft eingesetzt. Das Ventilelement weist vorzugsweise eine elastische Ventillippe auf, die gasdruckabhängig bewegbar ist. Das im wesentlichen plattenförmige Ventilelement liegt gemäß einem vorteilhaften Vorschlag der Erfindung auf der Stirnkante der Innenhülse auf und wird durch die an der Stirnfläche des Stopfenelements ausgebildete Anlagefläche gasdicht auf die Stirnkante der Innenhülse gedrückt. Die Ventillippe kann nun in einem Flächensegment des Ventilelementes ausgebildet sein und bei entsprechendem Gasdruck die Gasverbindung zwischen der Gasdurchführungsöffnung der Innenhülse und der Gasverbindungsöffnung des Stopfenelementes herstellen, so daß Gase in die Atmosphäre entweichen können.

Stopfenelement und Innenhülse gegebenenfalls auch das Ventilelement selbstkönnen im Spritzgußverfahren hergestellte Elemente sein, wobei erfindungsgemäß vorgesehen ist, daß die Anspritzpunkte jeweils außerhalb der Dicht- und Funktionsflächen angeordnet sind.

Mit der Erfindung wird eine einfache Verschlußstopfenanordnung angegeben, welche nur aus einem Minimum an Einzelelementen besteht, die ohne enge Fertigungstoleranzen beachten zu müssen separat herstellbar und auf einfachste Weise miteinander montierbar sind. So kann das Ventilelement an der Anlagefläche im Stopfenelement fixiert werden, welche Anlagefläche zugleich auch ein Ventilgegenlager bereitstellt. Nach Positionierung der Innenhülse in der Eintreibposition kann durch ein einfaches Druckwerkzeug, welches keine speziellen Formungen unter Berücksichtigung der Verschlußkonstruktion aufweisen muß, beispielsweise einen einfachen ebenen Stempel umfaßt, Druck auf den Montageansatz der Innenhülse ausgeübt werden, bis die Innenhülse im Inneren des Stopfenelementes positioniert ist und mit der im Hohlraum des Stopfenelements befindlichen Stirnkante dichtend am Ventilelement anliegt. Die Eintreibposition ist durch einen Anschlag im Inneren des Stopfenelementes begrenzt. Im übrigen hängt die Eintreibposition nur von der über einen bestimmten Weg aufgebrachten Kraft ab, so daß montageseitig flexibel auf Besonderheiten der Einzelbauteile reagiert werden kann. Nach dem Eintreiben der Innenhülse wird eine gasdichte Verbindung zwischen der äußeren freien Stirnkante des Stopfenelementes und der Innenhülse hergestellt, wozu vorzugsweise am Montageansatz ausgebildete Materialüberstände oder extra ausgebildete Verbindungsbereiche der Innenhülse verwendet werden. Da der Montageansatz nach Herstellung des Verschlusses in seinem Außenbereich keine weiteren Funktionen übernimmt, haben etwaige Beschädigungen beim Eintreiben der Innenhülse oder beim Herstellen der Verschweißung keinen Nachteil. Allerdings übernimmt der aus dem Verschluß unten herausstehende Montageansatz im Betrieb des Verschlusses die Aufgabe der Flüssigkeitsrückführung bzw. der Abtropfführung, so daß abtropfende rückgeführte Flüssigkeiten auf einfache und sichere Weise in die Zelle zurückgeführt wird. Diese Funktion wird jedoch durch Veränderungen und Beschädigungen des Montageansatzes in seinem Außenbereich, also Stirnkantenbereich und äußerer Fläche, nicht beeinträchtigt.

Mit der Erfindung werden erhebliche wirtschaftliche Vorteile bei der Einzelteilfertigung und der Montage einer Verschlußstopfenanordnung erzielt, so daß diese insgesamt signifikante wirtschaftliche Vorteile bewirkt und darüber hinaus technische Vereinfachungen mit sich bringt, insbesondere was die Einzelteilfertigung wegen verringerter Toleranzforderungen und die Montage betrifft, da keine speziellen Montagewerkzeuge und keine besonderen Montageverfahren erforderlich sind.

Weitere Vorteile und Merkmale der Erfindung ergeben sich aus der folgenden Beschreibung anhand der Figuren.

Es zeigen:
- Fig.1: eine Verschlußstopfenanordnung mit einer in einem Verschlußstopfenelement angeordneten gasdicht verschweißten Innenhülse und einem Ventilelement,
- Fig. 2: die Verschlußstopfenanordnung nach Fig. 1 vor dem Verschweißen der Innenhülse,
- Fig. 3: die Innenhülse der Verschlußstopfenanordnung nach Fig. 1 und
- Fig. 4: das Ventilelement der Verschlußstopfenanordnung nach Fig. 1.

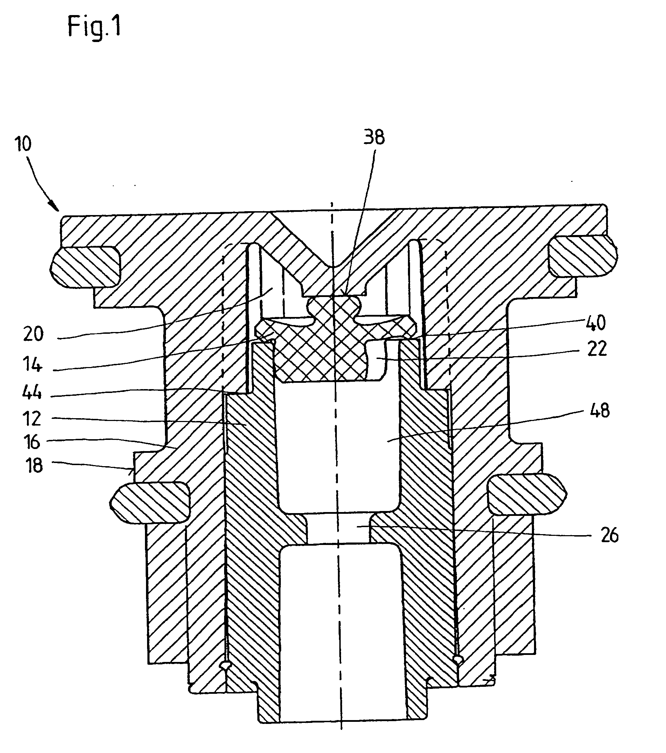

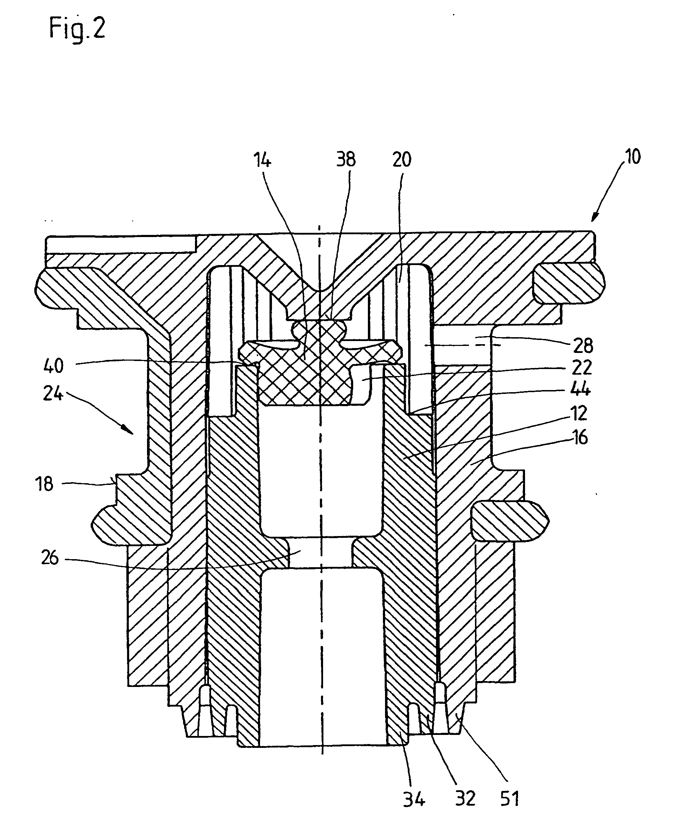

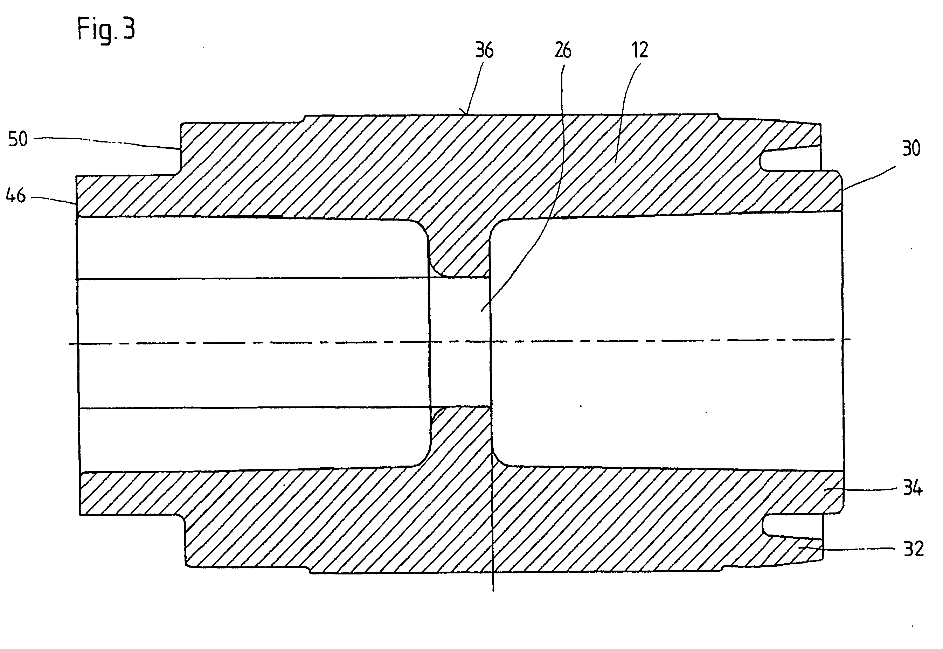

Fig. 1 zeigt eine Verschlußstopfenanordnung 10 für eine Zellenöffnung eines nicht näher dargestellten Akkumulators mit einem eine Innenhülse 12 und ein Ventilelement 14 aufweisenden Stopfenelement 16. Das Stopfenelement 16 ist topfförmig mit einer zum Einsetzen in die und Verschließen der Zellenöffnung geeigneten Außenkontur 18, einem innen liegenden Hohlraum 20 und einer Gasverbindungsöffnung 28 zwischen Hohlraum 20 und Außenseite 24 ausgebildet (Fig. 2). Die Innenhülse 12 ist zylindrisch mit einer zum Einsetzen in den Hohlraum 20 des Stopfenelements 16 geeigneten Außenkontur 36 (Fig. 3) und einer in den Hohlraum 20 mündenden Gasdurchleitungsöffnung 26 ausgebildet.

Das Ventilelement 14 ist als separates und im Hohlraum 20 durch die Innenhülse 12 fixiertes Element ausgebildet. Es stellt gasdruckabhängig eine Gasverbindung 22 zwischen der Gasdurchleitungsöffnung 26 der Innenhülse 12 und der Gasverbindungsöffnung 28 des Stopfenelements 16 her.

Die Innenhülse 12 und das Stopfenelement 16 sind gasdicht miteinander verbunden. Ferner weist die Innenhülse 12 einen im Einbauzustand teilweise aus dem Hohlraum 20 des Stopfenelements 16 herausstehenden Montageansatz 30 auf (Fig. 3).

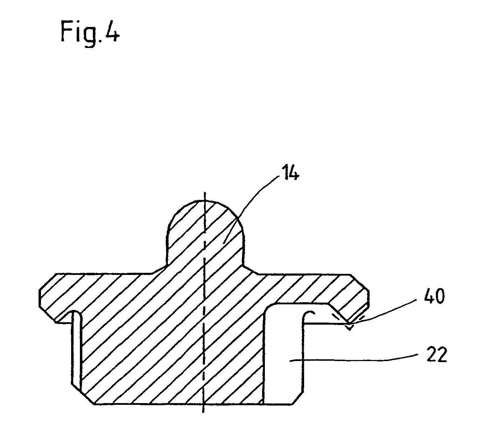

Der Montageansatz 30 ist durch das Innere von zwei konzentrisch angeordneten Ringelementen 32, 34 gebildet. Das Außenringelement 32 ist mit dem Stopfenelement 16 verschweißt. Dieses weist dazu einen Ringansatz 51 auf. Die Innenhülse 12 weist femer in Richtung Ventilelement 14 eine Ausnehmung 50 (Fig. 3) auf, die im montierten Zustand an einem Montageanschlag 44 des Stopfenelements 16 ansteht. Das Stopfenelement 16 weist ein Ventilgegenlager 38 auf, an dem der Ventilkörper 14 ansteht. Femer ist am Ventilkörper 14 eine druckabhängig bewegbare Ventillippe 40 ausgebildet (Fig. 4), die mit der Stirnkante 46 der Innenhülse 12 ein Ventil bildet. Das Stopfenelement 16 und die Innenhülse 12 sind Spritzgußbauteile, deren Anspritzpunkte außerhalb der Funktionsflächenbereiche positioniert sind. Das Ventilelement 14 ist durch die Bohrung 48 der Innenhülse 12 während der Montage axial geführt.

Über den Montageansatz 30 mit einem Kraftansatzpunkt an seiner als Ringfläche definiert ausgebildeten Stirnkante ist die Innenhülse 12 in das Stopfenelement 16 durch ein Werkzeug mit geringem Positionieraufwand einpreßbar. Das Ventilelement 14 kann vorher im Stopfenelement 16 oder an der Innenhülse 12 positioniert werden. Dabei sind bezüglich der Toleranzen an das Werkzeug und die Bauteile keine erhöhten Anforderungen gestellt, da nach Erreichen der Endstellung der Innenhülse 12 im Stopfenelement 16 der Montageansatz 30 weiterhin aus dem Stopfenelement 16 hervorsteht. Ebenso sind axiale Toleranzen der Bauelemente teilweise ausgleichbar, weil die Innenhülse 14 bis zum definierten Anschlag 44 eingeführt ist.

Das Ventilelement 14 befindet sich somit in einem für die Funktion wichtigen, definierten Zustand, indem eine definierte Kraft auf das Ventilelement 14 wirkt. Daher ist auch der Öffnungsgasdruck des aus Stirnkante 46 der Innenhülse 12 und der Ventillippe 40 des Ventilelements 14 gebildeten Ventils bestimmt.

Montagebedingte Beschädigungen und deren Auswirkungen auf die Ventilfunktion sind somit reduziert.

Der Fachmann wird die Merkmale auch einzeln betrachten und zu weiteren sinnvollen Kombinationen zusammenfassen.

### Bezu szeichenliste

- 10: Verschlußstopfenanordnung
- 12: Innenhülse
- 14: Ventilelement
- 16: Stopfenelement
- 18: Außenkontur
- 20: Hohlraum
- 22: Gasverbindung
- 24: Außenseite
- 26: Gasdurchleitungsöffnung
- 28: Gasverbindungsöffnung
- 30: Montageansatz
- 32: Ringelement (außen)
- 34: Ringelement
- 36: Außenkontur
- 38: Ventilgegenlager
- 40: Ventillippe
- 44: Montageanschlag
- 46: Stirnkante
- 48: Bohrung
- 50: Ausnehmung
- 51: Ringansatz

## Patentansprüche

1. Verschlussstopfenanordnung (10) für eine Zellenöffnung eines Akkumulators, mit einem eine Innenhülse (12) und ein Ventilelement (14) aufweisenden Stopfenelement (16), wobei das Stopfenelement (16) topfförmig mit einer zum Einsetzen in die und Verschließen der Zellenöffnung geeigneten Außenkontur (18), einem innen liegenden Hohlraum (20) und einer Gasverbindungsöffnung (28) zwischen Hohlraum (20) und Außenseite (24) ausgebildet ist, die Innenhülse (12) im Wesentlichen zylindrisch mit einer zum Einsetzen in den Hohlraum (20) des Stopfenelements (16) geeigneten Außenkontur (36) und einer in den Hohlraum (20) mündenden Gasdurchteitungsöffnung (26) ausgebildet ist, das Ventilelement (14) als separates, im Hohlraum (20) durch die Innenhülse (12) fixierbares und gasdruckabhängig eine Gasverbindung (22) zwischen der Gasdurchleitungsöffnung (26) der Innenhülse (12) und der Gasverbindungsöffnung (28) des Stopfenelements (16) herstellendes Element ausgebildet ist und die Innenhülse (12) und das Stopfenelement (16) gasdicht miteinander verbindbar sind, **dadurch gekennzeichnet, dass** die Innenhülse (12) einen im Einbauzustand aus dem Hohlraum (20) des Stopfenelements (16) herausstehenden Montageansatz (30) aufweist.

2. Verschlußstopfenanordnung nach Anspruch 1, **dadurch gekennzeichnet, daß** der Montageansatz (30) ringförmig ausgebildet ist.

3. Verschlußstopfenanordnung nach einem der vorhergehenden Ansprüche, **dadurch gekennzeichnet, daß** der Montageansatz (30) aus zwei konzentrisch angeordneten Ringelementen (32, 34) gebildet ist.

4. Verschlußstopfenanordnung nach einem der Ansprüche 2 oder 3, **dadurch gekennzeichnet, daß** die ringförmigen Montageansätze (32, 34) ringsegmentförmig ausgebildet sind.

5. Verschlußstopfenanordnung nach einem der Ansprüche 3 oder 4, **dadurch gekennzeichnet, daß** der Außenring (32) mit dem Stopfenelement (16) verschweißbar ist.

6. Verschlußstopfenanordnung nach einem der vorhergehenden Ansprüche, **dadurch gekennzeichnet, daß** das Stopfenelement (16) einen Montageanschlag (44) für die Innenhülse (12) aufweist.

7. Verschlußstopfenanordnung nach einem der vorhergehenden Ansprüche, **dadurch gekennzeichnet, daß** das Stopfenelement (16) ein Ventilgegenlager (38) aufweist.

8. Verschlußstopfenanordnung nach einem der vorhergehenden Ansprüche, **dadurch gekennzeichnet, daß** das Ventilelement (14) ein eine druckabhängig bewegbare Ventillippe (40) aufweisender Ventilkörper (14) ist.

9. Verschlußstopfenanordnung nach einem der vorhergehenden Ansprüche, **dadurch gekennzeichnet, daß** das Stopfenelement (16) und die Innenhülse (12) Spritzgußbauteile sind.

10. Verschlußstopfenanordnung nach Anspruch 9, **dadurch gekennzeichnet, daß** die Anspritzpunkte der Spritzgußelemente außerhalb von Dicht- und Funktionsflächenbereichen positioniert sind.

## Claims

1. Plug arrangement (10) for a cell opening of a storage battery, with a plug element (16) having an inner sleeve (12) and a valve element (14), the plug element (16) being formed as a cup with an outer contour (18) suitable for insertion into and closing of the cell opening, an internal cavity (20) and a gas port (28) between the cavity (20) and the outer side (24), the inner sleeve (12) being formed essentially cylindrically with an outer contour (36) suitable for insertion into the cavity (20) of the plug element (16) and a gas passage (26) opening out into the cavity (20), the valve element (14) being formed as a separate element which can be fixed in the cavity (20) by the inner sleeve (12) and, dependent on the gas pressure, establishes a gas connection (22) between the gas passage (26) of the inner sleeve (12) and the gas port (28) of the plug element (16), and the inner sleeve (12) and the plug element (16) being able to be connected to each other in a gastight manner, **characterized in that** the inner sleeve (12) has an installation fitting (30), which in the assembled state of the system protrudes from the cavity (20) of the plug element (16).

2. Plug arrangement according to Claim 1, **characterized in that** the installation fitting (30) is of an annular form.

3. Plug arrangement according to one of the preceding claims, **characterized in that** the installation fitting (30) is formed by two concentrically arranged ring elements (32, 34).

4. Plug arrangement according to either of Claims 2 and 3, **characterized in that** the annular installation fittings (32, 34) are formed as ring segments.

5. Plug arrangement according to either of Claims 3 and 4, **characterized in that** the outer ring (32) can be welded to the plug element (16).

6. Plug arrangement according to one of the preceding claims, **characterized in that** the plug element (16) has an installation fitting (44) for the inner sleeve (12).

7. Plug arrangement according to one of the preceding claims, **characterized in that** the plug element (16) has a valve counter-bearing (38).

8. Plug arrangement according to one of the preceding claims, **characterized in that** the valve element (14) is a valve body (14) having a valve lip (40) which is movable pressure dependently.

9. Plug arrangement according to one of the preceding claims, **characterized in that** the plug element (16) and the inner sleeve (12) are injection-moulded components.

10. Plug arrangement according to Claim 9,
**characterized in that** the gate marks of the injection-moulded elements are positioned outside sealing and functional area regions.

## Revendications

1. Ensemble bouchon (10) pour une ouverture de cellule d'un accumulateur, comprenant un bouchon (16) avec une douille intérieure (12) et un élément de soupape (14), dans lequel
le bouchon (16) a la forme d'un pot dont le contour extérieur (18) est approprié à être inséré dans l'ouverture de cellule et fermer celle-ci, avec un espace creux intérieur (20) et une ouverture de communication de gaz (28) entre l'espace creux (20) et la face extérieure (24),
la douille intérieure (12) a une forme essentiellement cylindrique avec un contour extérieur (36) approprié à être inséré dans l'espace creux (20) du bouchon (16) et une ouverture de passage de gaz (26) débouchant dans l'espace creux (20), et
l'élément de soupape (14) est un élément séparé qui peut être fixé par la douille intérieure (12) dans l'espace creux (20) et établit en fonction de la pression de gaz une communication de gaz (22) entre l'ouverture de passage de gaz (26) de la douille intérieure (12) et l'ouverture de communication de gaz (28) du bouchon (16), la douille intérieure (12) et le bouchon (16) pouvant être reliés l'un à l'autre de manière étanche au gaz,
**caractérisé en ce que**
la douille intérieure (12) présente un embout de montage (30) dépassant à l'état monté de l'espace creux (20) du bouchon (16).

2. Ensemble bouchon selon la revendication 1,
**caractérisé en ce que**
l'embout de montage (30) a une forme annulaire.

3. Ensemble bouchon selon l'une quelconque des revendications précédentes,
**caractérisé en ce que**
l'embout de montage (30) est formé à partir de deux éléments annulaires (32, 34) concentriques.

4. Ensemble bouchon selon l'une quelconque des revendications 2 ou 3,
**caractérisé en ce que**
les embouts de montage annulaires (32, 34) ont la forme de segments d'anneau.

5. Ensemble bouchon selon l'une quelconque des revendications 3 ou 4,
**caractérisé en ce que**
l'anneau extérieur (32) peut être soudé avec le bouchon (16).

6. Ensemble bouchon selon l'une quelconque des revendications précédentes,
**caractérisé en ce que**
le bouchon (16) présente une butée de montage (44) pour la douille intérieure (12).

7. Ensemble bouchon selon l'une quelconque des revendications précédentes,
**caractérisé en ce que**
le bouchon (16) présente un palier-support de soupape (38).

8. Ensemble bouchon selon l'une quelconque des revendications précédentes,
**caractérisé en ce que**
l'élément de soupape (14) est un corps de soupape (14) présentant une lèvre de soupape (40) mobile en fonction de la pression.

9. Ensemble bouchon selon l'une quelconque des revendications précédentes,
**caractérisé en ce que**
le bouchon (16) et la douille intérieure (12) sont des pièces moulées par injection.

10. Ensemble bouchon selon la revendication 9,
**caractérisé en ce que**
les points d'injection des pièces moulées par injection sont positionnés à l'extérieur de zones de surfaces d'étanchéité et fonctionnelles.
